(19) Europäisches Patentamt / European Patent Office / Office européen des brevets

(11) **EP 2 509 185 B1**

(12) **EUROPEAN PATENT SPECIFICATION**

(45) Date of publication and mention
of the grant of the patent:
**11.09.2013 Bulletin 2013/37**

(51) Int Cl.:
***H02J 7/00*** *(2006.01)*

(21) Application number: **11161774.2**

(22) Date of filing: **08.04.2011**

(54) **Balancer circuit for rechargeable batteries**

Ausgleicherschaltung für wiederaufladbare Batterien

Circuit de compensateur pour batteries rechargeables

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.10.2012 Bulletin 2012/41**

(73) Proprietor: **Super B B.V.
7554 TA Hengelo (NL)**

(72) Inventor: **Doornekamp, Marinus Hendrikus
7554 TA, Hengelo (Ov) (NL)**

(74) Representative: **Nederlandsch Octrooibureau
P.O. Box 29720
2502 LS The Hague (NL)**

(56) References cited:
**US-B1- 6 211 650**

## Description

### Field of the invention

The present invention relates to a balancer circuit for a cell in a rechargeable battery, comprising connecting terminals for connection of the balancer circuit to the cell.

### Prior art

International patent publication WO2010114806 discloses a charge-balancing system for multiple cells in a battery. The system includes multiple circuits and a control module. Each circuit includes first and second switches connected in series and an inductance having a first end connected between the first and second switches. The control module outputs control signals to control the first and second switches. A second end of the inductance of a first one of the N circuits is connected between two cells of a first pair of series-connected cells of a battery stack. The first and second switches of the first one of the N circuits are connected in parallel to the first pair of 2N series-connected cells.

US 6 211 650 represents the basis for the preamble of claim 1.

### Summary of the invention

The present invention seeks to provide a cost effective and easy to implement solution to provide a reliable balancing functionality for battery packs having multiple cells.

According to the present invention, a balancer circuit according to the preamble defined above is provided, in which a first resistor connected to one of the connecting terminals, and a voltage switch in series with the first resistor and connected to the other one of the connecting terminals, the voltage switch being operable to shunt a balancing current through the first resistor when a load voltage sensed over the connecting terminals is higher than a threshold voltage.

The present invention embodiments allow to implement a simple electronic circuit using cost-efficient components to provide the function of cell balancing in a battery pack. A battery pack may be provided comprising a plurality of rechargeable cells, which is provided with one or more balancing circuits for each one of the plurality of rechargeable cells. Furthermore, a battery pack comprising a plurality of rechargeable cells in a series configuration may be provided, comprising a balancer arrangement for the series configuration of cells. The electronic components of the balancer circuit may be provided on very small PCB's or similar carriers, and easily integrated with the battery pack. When positioning the circuits of the present invention close to each cell, the size of the battery pack will not be affected at all.

### Short description of drawings

The present invention will be discussed in more detail below, using a number of exemplary embodiments, with reference to the attached drawings, in which

Fig. 1 shows a circuit diagram of a balancing circuit according to an embodiment of the present invention;

Fig. 2 shows an circuit diagram of a further embodiment of a balancing circuit according to the present invention; and

Fig. 3 shows a circuit diagram of a series configuration of an embodiment of the balancing circuit according to the present invention.

### Detailed description of exemplary embodiments

Cells in battery packs of present day rechargeable batteries for a wide range of applications (e.g. automotive) need special attention during the charge stage. Due to manufacturing tolerances and other factors, the cells in a battery pack may slightly differ from one another. In order to make sure that charging can take place without risk, and to prolong the life of cells in a battery pack, controlled charging is a much used technique. As multiple cells are usually present in battery packs, in parallel, series or a combination of parallel and series configuration, balancing of each cell is very important in order to obtain similar voltages for each cell. In the present invention embodiments, parallel discharging using a shunt is implemented to even out differences between cells.

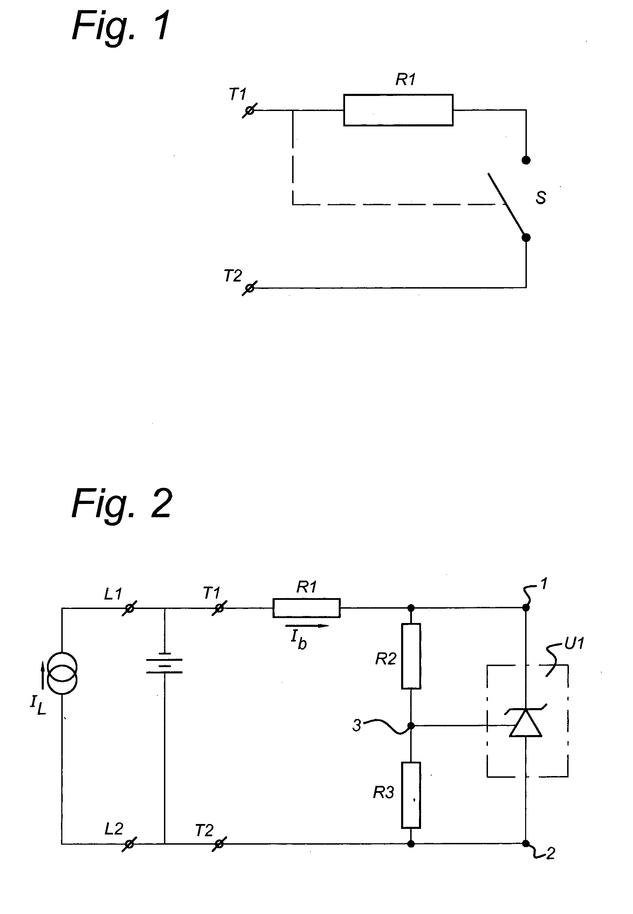

Fig. 1 shows a circuit diagram of a first embodiment of the balancer circuit of the present invention. The balancer circuit comprises connecting terminals T1, T2 for connection of the balancer circuit to the cell, a first resistor R1 connected to one of the connecting terminals T1; T2, and a voltage switch S in series with the first resistor R1 and connected to the other one of the connecting terminals T2; T1, the voltage switch S being operable to shunt a balancing current through the first resistor R1 when a load voltage sensed over the connecting terminals T1, T2 is higher than a threshold voltage.

The cell for which the present invention embodiments of the balancer circuit are suitable is e.g. a lithium based cell (Li Ion; Li Polymer; LiFeP04, etc.) but also other rechargeable cell types can be used.

The switch S of the embodiment of Fig. 1 with the functionality as described can be implemented as a voltage reference circuit U1, e.g. in a configuration as shown in the embodiment of Fig. 2. More specifically, the element U1 can be an adjustable voltage reference circuit which allows to accurately set the threshold voltage for the present invention embodiments. E.g. the element U1 is a three terminal adjustable (band-gap) voltage reference diode, as commercially available under the designation LM385 from National Semiconductor. In general, any switch type of element or component which provides for an increase in conductivity as a function of voltage applied may be used as switch S in the present invention embodiment, e.g. a Zener diode. The higher the increaser rate as function of voltage, the better the element will mimic a switch type action.

The switch S can be implemented in semiconductor circuitry which is known as such, in order to provide a very cost effective solution. As long as the threshold voltage is not reached at the cell loading terminals T1, T2, the switch S will not be closed or conduct current (only a small leak current will flow through the semiconductor elements of switch S and first resistor R1. The specific choice of switch S and first resistor R1 will determine the total leakage current.

In the embodiment of Fig. 2, a balancer circuit is shown in operation, when a battery cell is connected to the connecting terminals T1, T2, as well as a battery loader providing a load current $I_L$ using the load terminals L1 and L2. The adjustable voltage reference circuit U1 comprises a first terminal 1 and a second terminal 2. The adjustable voltage reference circuit U1 provides a Zener diode like functional element between the first and second terminal 1, 2, and the adjustable voltage reference circuit U1 further comprising a third terminal 3 for input of a feedback signal.

The first resistor R1 is connected between a terminal T1 of the cell and the first terminal 1 of the adjustable voltage reference circuit U1. The balancer circuit further comprises a second resistor R2 and a third resistor R3, the second resistor R2 being connected between the first terminal 1 and third terminal 3, and the third resistor R3 being connected between the second terminal 2 and the third terminal 3.

As long as the voltage on the reference point (third terminal 3) of the adjustable voltage reference circuit U1 is lower than the threshold voltage, only a leakage current will flow. When the voltage on terminal 3 increases, the adjustable voltage reference circuit U1 will start conducting and a balancing current Ib will flow. The value of the balancing current Ib can be limited by the choice of the value of the first resistor R1. In an embodiment, the first resistor R1 has a value selected to set a balancing current Ib for the cell. This balancing current Ib is selected below a maximum rated current of the voltage switch S, in this embodiment of the adjustable voltage reference circuit U1.

The ratio of second and third resistor R2, R3 can be chosen to select the threshold voltage, and as a deduced parameter the maximum charge voltage over the terminals T1, T2. The maximum charge voltage can be a recommended charge voltage of the cell, or alternatively can be an absolute maximum charge voltage of the cell.

As a result, a balancer circuit is provided which can be used for various types of cells, as the balancing current is adjustable by means of the first resistor R1 and the maximum charge voltage can be set by means of the second and third resistor R2, R3.

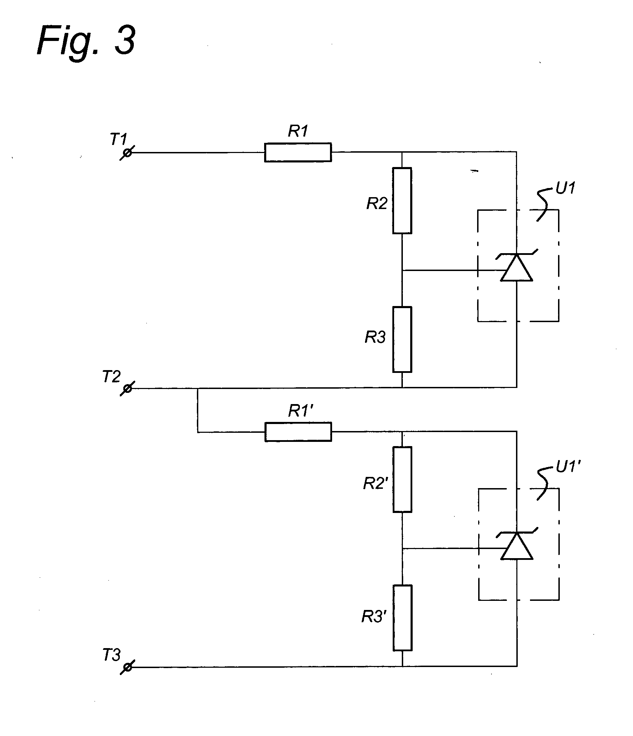

When a higher balancing current Ib is desired, a number of balancer circuits as described in the embodiments above may be used in parallel, as a result of which the total balancing current Ib increases. Furthermore, a number of balancing circuits may be put is series to allow balancing of multiple cells arranged in a series configuration. This is shown in the schematic block diagram of Fig. 3 for a series configuration of two cells. Also in this configuration multiple balancing circuits may be used in parallel if a higher balancing current Ib is desired.

In the circuit diagram of Fig. 3, a second balancing circuit is used, the components of which are marked with an apostrophe. In this circuit, three terminals T1-T3 are provided, a first cell of the series cell configuration being connected to the upper two terminals T1, T2 in operation, and a second cell of the series cell configuration being connected to the lower two terminals T2, T3. In other words, in a further aspect the present invention relates to a balancer arrangement arranged for providing a balancing current to a rechargeable battery comprising a plurality of cells in a series configuration, comprising a corresponding plurality of balancer circuits according to the present invention embodiments, wherein consecutive balancer circuits share a common terminal (T2 in the embodiment of Fig. 3) for connection to an associated series configuration of cells. Operation of both the upper and lower balancing circuit is similar to the operation of the circuit described with reference to Fig. 2 above.

For a Lithium Iron Phosphate cell and using an LM385 integrated circuit as discussed above, the following exemplary calculations can be made for determining the values of the first, second and third resistor R1-R3.

The recommended maximum charge voltage per cell is 3.6 Volt, and the absolute maximum voltage per cell is 4.3 Volt. The voltage on the first terminal 1 of element U1 (see Fig. 2) can be calculated as VB = VU1,ref (R3/R2 +1), and e.g.

$$VB = 1.24(196K/100K + 1) = 3.67 \text{ Volt} \ (R2 = 100k\Omega; R3 = 196k\Omega).$$

This formula shows that the threshold voltage to be used in the balancer circuit can be set using the correct values of R2 and R3 in a wide range. A similar calculation for a Lithium Polymer cell having a maximum cell voltage of 4.5 Volt, would be possible using $VB = 1.24 (196k/75k) + 1) = 4.48$ Volt ($R2 = 75k\Omega$; $R3 = 196k\Omega$). Almost any threshold voltage can be set in a very wide range, as a result of which the present invention balancer circuit may be applied in almost all lithium based and non-lithium based cells.

The balancing current Ib can be set using the value of the first resistor. When taking a Lithium Polymer cell (with maximum voltage 4.3 Volt) and a Lithium Iron Phosphate cell (with maximum voltage 3.6 Volt), and a first resistor R1 of $5.7\Omega$ as examples, the balancing currents may be calculated as:

$$Ib = (4.3 - 1.24) / 5.7 = 0.53A \text{ (at 4.3Volt per cell)}$$
$$Ib = (3.6 - 1.24) / 5.7 = 0.40A \text{ (at 3.6Volt per cell)}$$

Using a first resistor R1 having a value of $10\Omega$, the balancing currents will be:

$$Ib = (4.3 - 1,24) / 10 = 0.31A \text{ (at 4.3Volt per cell)}$$
$$Ib = (3.6 - 1.24) / 10 = 0.24A \text{ (at 3.6Volt per cell)}$$

Using the above implementations of balancer circuits, a battery pack may be provided comprising a plurality of rechargeable cells, which is provided with one or more balancing circuits for each one of the plurality of rechargeable cells. Furthermore, a battery pack comprising a plurality of rechargeable cells in a series configuration may be provided, comprising a balancer arrangement for the series configuration of cells. The electronic components of the balancer circuit (R1-R3, U1 and the connecting terminals T1-T2) may be provided on very small PCB's or similar carriers, and easily integrated with the battery pack. When positioning the circuits of the present invention close to each cell, the size and dimensions of the battery pack will not be changed at all, and weight will only increase with a small amount.

The present invention embodiments have been described above with reference to a number of exemplary embodiments as shown in the drawings. Modifications and alternative implementations of some parts or elements are possible, and are included in the scope of protection as defined in the appended claims.

## Claims

1. Balancer circuit for a cell in a rechargeable battery, comprising connecting terminals (T1, T2) for connection of the balancer circuit to the cell, a first resistor (R1) connected to one of the connecting terminals (T1; T2), and a voltage switch (S) in series with the first resistor (R1) and connected to the other one of the connecting terminals (T2; T1), the voltage switch (S) being operable to shunt a balancing current through the first resistor (R1) when a load voltage sensed over the connecting terminals (T1, T2) is higher than a threshold voltage, **characterised in that** the voltage switch (S) comprises an adjustable voltage reference circuit (U1), wherein the adjustable voltage reference circuit (U1) comprises a first terminal (1) and a second terminal (2), the adjustable voltage reference circuit (U1) providing a Zener diode functional element between the first and second terminal (1, 2), the adjustable voltage reference circuit (U1) further comprising a third terminal (3) for input of a feedback signal.

2. Balancer circuit according to claim 1, wherein the first resistor (R1) is connected between a terminal (T1; T2) of the cell and the first terminal (1) of the adjustable voltage reference circuit (U1), the balancer circuit further comprising a second resistor (R2) and a third resistor (R3), the second resistor (R2) being connected between the first terminal (1) and third terminal (3), and the third resistor (R3) being connected between the second terminal (2) and the third terminal (3).

3. Balancer circuit according to claim 2, wherein the ratio of second and third resistor (R2, R3) are chosen to select a maximum charge voltage.

4. Balancer circuit according to claim 3, wherein the maximum charge voltage is a recommended charge voltage of the cell.

**5.** Balancer circuit according to claim 3, wherein the maximum charge voltage is an absolute maximum charge voltage of the cell.

**6.** Balancer circuit according to any one of claims 1-5, wherein the first resistor (R1) has a value selected to set a balancing current for the cell.

**7.** Balancer circuit according to claim 6, wherein the balancing current is selected below a maximum rated current of the voltage switch (S).

**8.** Balancer circuit according to any one of claims 1-7, wherein the cell is a lithium based cell.

**9.** Balancer arrangement arranged for providing a balancing current to a rechargeable battery comprising a plurality of cells in a series configuration, comprising a corresponding plurality of balancer circuits according to any one of claims 1-8, wherein consecutive balancer circuits share a common terminal (T2) for connection to an associated series configuration of cells.

**10.** Battery pack comprising a plurality of rechargeable cells, provided with one or more balancing circuits according to any one of claims 1-8 for each one of the plurality of rechargeable cells.

**11.** Battery pack comprising a plurality of rechargeable cells in a series configuration, comprising a balancer arrangement according to claim 9.

**Patentansprüche**

**1.** Ausgleicherschaltung für eine Zelle in einer wiederaufladbaren Batterie, umfassend
Verbindungsanschlüsse (T1, T2) für eine Verbindung der Ausgleicherschaltung mit der Zelle,
einen ersten Widerstand (R1), der mit einem der Verbindungsanschlüsse (T1, T2) verbunden ist,
und einen Spannungsschalter (S) in Reihe mit dem ersten Widerstand (R1) und verbunden mit dem anderen der Verbindungsanschlüsse (T2, T1), wobei der Spannungsschalter (S) betreibbar ist, einen ausgleichenden Strom durch den ersten Widerstand (R1) abzuleiten, wenn eine Ladespannung, die über die Verbindungsanschlüsse (T1, T2) erfasst wird, höher als eine Schwellspannung ist, **dadurch gekennzeichnet, dass**
der Spannungsschalter (S) eine Schaltung (U1) für eine einstellbare Spannungsreferenz umfasst, wobei die Schaltung (U1) für die einstellbare Spannungsreferenz (U1) einen ersten Anschluss (1) und einen zweiten Anschluss (2) umfasst,
wobei die Schaltung (U1) für die einstellbare Spannungsreferenz ein Zenerdiodenfunktionselement zwischen dem ersten und zweiten Anschluss (1,2) bereitstellt,
wobei die Schaltung (U1) für die einstellbare Spannungsreferenz weiter einen dritten Anschluss (3) zur Eingabe eines Rückkopplungssignals umfasst.

**2.** Ausgleicherschaltung nach Anspruch 1, wobei der erste Widerstand (R1) zwischen einem Anschluss (T1, T2) der Zelle und dem ersten Anschluss (1) der Schaltung (U1) für eine einstellbare Spannungsreferenz verbunden ist,
wobei die Ausgleicherschaltung weiter einen zweiten Widerstand (R2) und einen dritten Widerstand (R3) umfasst,
wobei der zweite Widerstand (R2) zwischen dem ersten Anschluss (1) und dritten Anschluss (3) verbunden ist, und der dritte Widerstand (R3) zwischen dem zweiten Anschluss (2) und dem dritten Anschluss (3) verbunden ist.

**3.** Ausgleicherschaltung nach Anspruch 2, wobei das Verhältnis von zweitem und drittem Widerstand (R2, R3) gewählt wird um eine maximale Ladespannung auszuwählen.

**4.** Ausgleicherschaltung nach Anspruch 3, wobei die maximale Ladespannung eine empfohlene Ladespannung der Zelle ist.

**5.** Ausgleicherschaltung nach Anspruch 3, wobei die maximale Ladespannung eine absolute maximale Ladespannung der Zelle ist.

**6.** Ausgleicherschaltung nach einem der Ansprüche 1 bis 5, wobei der erste Widerstand (R1) einen Wert aufweist, der gewählt ist, um einen Ausgleichsstrom für die Zelle einzustellen.

**7.** Ausgleicherschaltung nach Anspruch 6, wobei der ausgleichende Strom unterhalb eines maximalen Nennstroms des Spannungsschalters (S) gewählt ist.

**8.** Ausgleicherschaltung nach einem der Ansprüche 1 bis 7, wobei die Zelle eine Lithium basierte Zelle ist.

**9.** Ausgleicheranordnung, welche zum Bereitstellen eines ausgleichenden Stroms an eine wiederaufladbare Batterie angeordnet ist, die eine Mehrzahl von Zellen in einer Reihenkonfiguration umfasst, umfassend eine entsprechende Mehrzahl von Ausgleicherschaltungen nach einem der Ansprüche 1 bis 8, wobei sich aufeinanderfolgende Ausgleicherschaltungen einen gemeinsamen Anschluss (T2) für eine Verbindung zu einer zugehörigen Reihenkonfiguration von Zellen teilen.

**10.** Batteriepack umfassend eine Mehrzahl von wiederaufladbaren Zellen, die mit einer oder mehreren Ausgleicherschaltungen nach einem der Ansprüche 1 bis 8 für jede der Mehrzahl von wiederaufladbaren Zellen bereitgestellt ist.

**11.** Batteriepack umfassend eine Mehrzahl von wiederaufladbaren Zellen in einer Reihenkonfiguration, umfassend eine Ausgleicheranordnung nach Anspruch 9.

**Revendications**

**1.** Circuit d'équilibrage pour une cellule dans une batterie rechargeable,
comprenant des bornes de connexion (T1, T2) pour la connexion du circuit d'équilibrage à la cellule, une première résistance (R1) connectée à l'une des bornes de connexion (T1 ; T2), et un commutateur de tension (S) en série avec la première résistance (R1) et connecté à l'autre des bornes de connexion (T2 ; T1), le commutateur de tension (S) pouvant être utilisé pour dériver un courant d'équilibrage à travers la première résistance (R1) lorsqu'une tension de charge détectée sur les bornes de connexion (T1, T2) est supérieure à une tension de seuil, **caractérisé en ce que** le commutateur de tension (S) comprend un circuit de référence de tension ajustable (U1), dans lequel le circuit de référence de tension ajustable (U1) comprend une première borne (1) et une deuxième borne (2), le circuit de référence de tension ajustable (U1) fournissant un élément fonctionnel à diode Zener entre les première et deuxième bornes (1, 2), le circuit de référence de tension ajustable (U1) comprenant en outre une troisième borne (3) pour l'entrée d'un signal de rétroaction.

**2.** Circuit d'équilibrage selon la revendication 1, dans lequel la première résistance (R1) est connectée entre une borne (T1 ; T2) de la cellule et la première borne (1) du circuit de référence de tension ajustable (U1),
le circuit d'équilibrage comprenant en outre une deuxième résistance (R2) et une troisième résistance (R3), la deuxième résistance (R2) étant connectée entre la première borne (1) et la troisième borne (3), et la troisième résistance (R3) étant connectée entre la deuxième borne (2) et la troisième borne (3).

**3.** Circuit d'équilibrage selon la revendication 2, dans lequel le rapport entre les deuxième et troisième résistances (R2, R3) est choisi pour sélectionner une tension de charge maximum.

**4.** Circuit d'équilibrage selon la revendication 3, dans lequel la tension de charge maximum est une tension de charge recommandée de la cellule.

**5.** Circuit d'équilibrage selon la revendication 3, dans lequel la tension de charge maximum est une tension de charge maximum absolue de la cellule.

**6.** Circuit d'équilibrage selon l'une quelconque des revendications 1 à 5, dans lequel la première résistance (R1) a une valeur sélectionnée pour établir un courant d'équilibrage pour la cellule.

**7.** Circuit d'équilibrage selon la revendication 6, dans lequel le courant d'équilibrage est sélectionné au-dessous d'un courant assigné maximum du commutateur de tension (S).

**8.** Circuit d'équilibrage selon l'une quelconque des revendications 1 à 7, dans lequel la cellule est une cellule au lithium.

**9.** Agencement d'équilibrage agencé pour fournir un courant d'équilibrage à une batterie rechargeable comprenant une pluralité de cellules en une configuration série, comprenant une pluralité correspondante de circuits d'équilibrage selon l'une quelconque des revendications 1 à 8, dans lequel les circuits d'équilibrage consécutifs partagent une borne commune (T2) pour une connexion à une configuration série associée de cellules.

10. Bloc de batteries comprenant une pluralité de cellules rechargeables, pourvu d'un ou de plusieurs circuits d'équilibrage selon l'une quelconque des revendications 1 à 8 pour chacune de la pluralité de cellules rechargeables.

11. Bloc de batteries comprenant une pluralité de cellules rechargeables en une configuration série, comprenant un agencement d'équilibrage selon la revendication 9.

## Fig. 1

## Fig. 2

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010114806 A
- US 6211650 B